# EUROPEAN PATENT SPECIFICATION

(11) **EP 3 512 111 B1**
(45) Date of publication and mention of the grant of the patent: **10.11.2021**
(21) Application number: 18196005.5
(22) Date of filing: 15.04.2010
(51) Int. Cl.: H04B 7/02

(54) **METHOD AND DEVICE FOR SUPPORTING MULTIPLE BANDS COEXISTENCE IN A RADIO FREQUENCY MODULE**
VERFAHREN UND VORRICHTUNG ZUR UNTERSTÜTZUNG DER KOEXISTENZ MEHRERER BÄNDER IN EINEM HOCHFREQUENZMODUL
PROCÉDÉ ET DISPOSITIF DE PRISE EN CHARGE DE COEXISTENCE DE MULTIPLES BANDES DANS UN MODULE DE FRÉQUENCE RADIO

(30) Priority: 15.04.2009 CN 200910132056
(43) Date of publication of application: 17.07.2019
(62) Divisional of application: 10764102.9
(73) Proprietor: Huawei Technologies Co., Ltd., Shenzhen, Guangdong 518129 (CN)
(72) Inventor: LV, Rui, Shenzhen, Guangdong 518129 (CN)
(74) Representative: Pfenning, Meinig & Partner mbB

(56) References cited:
- CA-A1- 2 467 201
- CN-A- 101 330 309

## Description

This application claims priority to Chinese Patent Application No. 200910132056.1, filed with the Chinese Patent Office on April 15, 2009 and entitled "Method and Device for Supporting Multiple Bands Coexistence in a Radio Frequency Module".

### FIELD OF THE INVENTION

The present invention relates to a radio communications technology, and in particular, to a method and a device for supporting multiple bands coexistence in a radio frequency module.

### BACKGROUND

As an important part of a radio communications device, such as a base station and a terminal, the radio frequency front-end receives and transmits radio signals, and plays a key role in a radio communications system. The radio frequency front-end generally consists of two parts: a transmitter and a receiver, which are collectively known as a transceiver (TRX).

In a civil communication base station, different frequency bands need to use different radio frequency front-end modules (Radio frequency modules for short) to establish uplink and downlink communication of radio signals with a terminal device. The Third-Generation Partnership Project Technical Specification (3GPP TS) 36.104 protocol defines 14 Frequency Division Duplex (FDD) bands: Band 1-14, as listed in Table 1.

**Table 1 14 FDD BANDS**

| **E-U TRA Band** | **Uplink(UL) eNodeB Receiving and UE Transmitting** | **Downlink(DL) eNodeB Transmitting and UE Receiving** | **Multipl exing Mode** |
|---|---|---|---|
| | **FUL_low- FUL_high** | **FDL_low- FDL_high** | |
| 1 | 1920MHz-1980 MHz | 2110 MHz -2170 MHz | FDD |
| 2 | 1850 MHz -1910 MHz | 1930 MHz -1990 MHz | FDD |
| 3 | 1710 MHz -1785 MHz | 1805 MHz -1880 MHz | FDD |
| 4 | 1710 MHz -1755 MHz | 2110 MHz -2155 MHz | FDD |
| 5 | 824 MHz -849 MHz | 869 MHz -894 MHz | FDD |
| 6 | 830 MHz -840 MHz | 875 MHz -885 MHz | FDD |
| 7 | 2500 MHz -2570 MHz | 2620 MHz -2690 MHz | FDD |
| 8 | 880 MHz -915 MHz | 925 MHz -960 MHz | FDD |
| 9 | 1749.9 MHz -1784.9 MHz | 1844.9 MHz -1879.9 MHz | FDD |
| 10 | 1710 MHz -1770 MHz | 2100 MHz -2170 MHz | FDD |
| 11 | 1427.9 MHz -1452.9 MHz | 1475.9 MHz -1500.9 MHz | FDD |
| 12 | 698 MHz -716 MHz | 728 MHz -746 MHz | FDD |
| 13 | 777 MHz -787 MHz | 746 MHz -756 MHz | FDD |
| 14 | 788 MHz -798 MHz | 758 MHz -768 MHz | FDD |

At present, at least 14 radio frequency modules of different frequency bands are required to meet the requirements for frequency spectrum resources in the world. In the industry, a radio frequency module mainly includes two kinds of main modalities: a remote radio unit (RRU) and a radio frequency unit (RFU). The RRU is used for a radio frequency module of a distributed base station, and the RFU is used for a radio frequency module of a cabinet base station. Take a macro RRU and a macro RFU for wide-area coverage as an example. Multiple bands need to work at the same time, so a common practice is to combine radio frequency modules of different frequency bands.

When implementing the present invention, the inventor finds at least the following disadvantage of the prior art, using a single radio frequency module to support coexistence of multiple bands is the development trend of the bandwidth application technology. However, the prior art fails to process signals of more than two frequency bands by using a single radio frequency module in a simple and low-cost way.

CN1013303039A concerns a multi-frequency-band digital radio frequency system. CA 2 467 201 A1 addresses reduction or elimation of blocking signals.

### SUMMARY

A method for supporting multiple bands coexistence in a radio frequency module and a device thereof are provided, according to the current invention as specified in the independent claims, to process signals of more than two frequency bands at the same time by using a single radio frequency module in a simple way.

Embodiments in the description which do not fall within the scope of the claims are not part of the invention but represent background art useful for understanding the invention.

### BRIEF DESCRIPTION OF THE DRAWINGS

FIG. 1 shows a structure of a radio frequency module that supports two frequency bands;
FIG. 2 shows frequency band features of the radio frequency module shown in FIG. 1;
FIG. 3 shows a structure of a radio frequency module provided in embodiment 1 of the present invention;
FIG. 4 shows a structure of a radio frequency module provided in embodiment 2 of the present invention;
FIG. 5 shows a process of receiving radio frequency signals in the radio frequency module provided in the embodiment 2 of the present invention;
FIG. 6 shows a process of mixing radio frequency signals in the radio frequency module provided in embodiment 2 of the present invention;
FIG. 7 shows a filtering and merging process in the radio frequency module provided in embodiment 2 of the present invention;
FIG. 8 shows a process of eliminating intra-frequency blocking interference in the radio frequency module provided in embodiment 2 of the present invention;
FIG. 9 shows an analog-digital conversion process in the radio frequency module provided in embodiment 2 of the present invention;
FIG. 10 shows a structure of a radio frequency module provided in embodiment 3 of the present invention;
FIG. 11 shows a process of eliminating intra-frequency blocking interference in the radio frequency module provided in embodiment 3 of the present invention;
FIG. 12 shows a structure of a radio frequency module provided in embodiment 4 of the present invention;
FIG. 13 shows a process of a method for supporting multiple bands coexistence in a radio frequency module in embodiment 5 of the present invention; and
FIG. 14 shows a process of a method for supporting multiple bands coexistence in another radio frequency module in embodiment 5 of the present invention.

### DETAILED DESCRIPTION

To clarify the purpose, technical scheme, and advantages the present invention, embodiments are described with drawings as follows. The embodiments and related descriptions are used to explain the present invention but do not confine the present invention.

In the 3GPP TS 36.104 protocol, the transmit frequency bands of frequency bands 12 to 14 are close to each other with a frequency gap of 40 MHz, but the receiving frequency bands of these frequency bands are far from each other with a frequency gap of 100 MHz. In this scenario, using one radio frequency module may easily support two or more frequency bands. The embodiments of the present invention take at least two frequency bands (including two frequency bands) among frequency bands 12 to 14 for example.

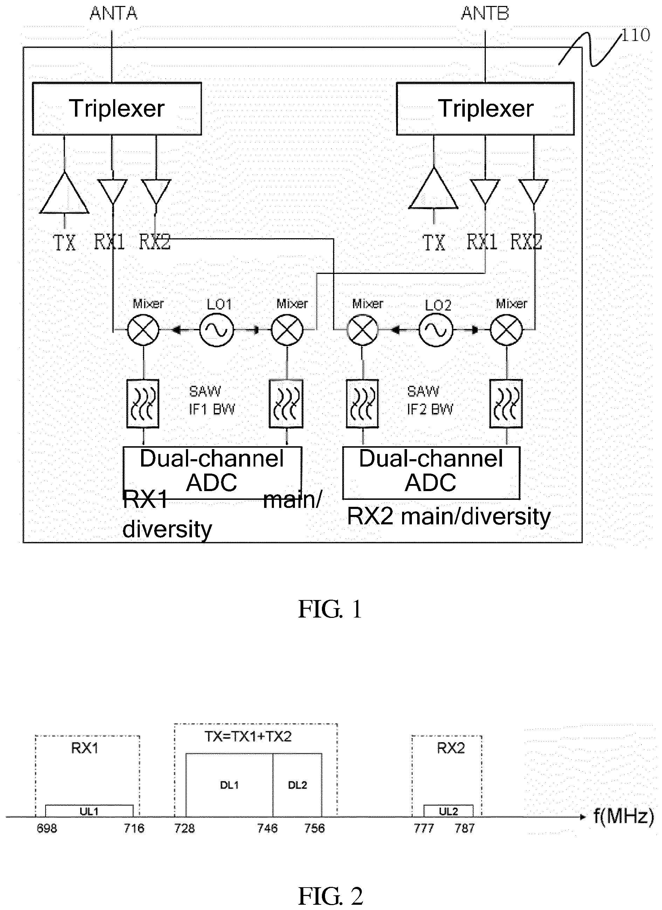

The following first describes the structure of a radio frequency module (transceiver) that processes two frequency bands (for example, frequency bands 12 and 13) at the same time. As shown in FIG. 1, the radio frequency module 110 is a double-transmit double-receive (2T2R) radio frequency module that uses a triplexer. The frequency band features of this radio frequency module are as shown in FIG. 2. The frequency range of the transmit frequency band of the triplexer in the radio frequency module is as follows: FTX = FTX1 + FTX2, where FTX1 is the transmit frequency range in frequency band 12, and FTX2 is the transmit frequency range in frequency band 13. The transmitting part of the triplexer uses a transmit cavity band-pass filter (not illustrated) to directly cover the frequency range of the entire FTX and suppress the receive frequency bands FRX1 and FRX2. The receiving part of the triplexer consists of two receive band-pass cavity filters (not illustrated). The frequency range includes FRX1 (receive frequency range of frequency band 12) and FRX2 (receive frequency range of frequency band 13). These two receive band-pass cavity filters may suppress the transmit frequency range FTX. In FIG. 1, one triplexer consists of one transmit cavity, two receive cavities, and four interfaces, including one ANT (antenna) interface, one interface with the transmit cavity, and two interfaces with the receive cavities. For the 2T2R receive mode, two triplexers are used. Accordingly, two transmit cavities, four receive cavities, two antenna interfaces (ANTA and ANTB), two interfaces with the transmit cavities, and four interfaces with the receive cavities exist.

In FIG. 1, the downlink transmit signal TX in the entire FTX frequency range is transmitted through antenna interfaces ATNA and ANTB after being amplified. The two signals may form a transmit diversity. In a multi-mode multi-carrier system, due to the power consumption of an entire module, signals of different modes or multiple carriers may be divided into two parts, and sent out through ANTA and ANTB respectively.

For the receiving part, the transceiver uses the receive cavities of the triplexer to receive two channels of RX1 signals from frequency band 12 of ANTA and ANTB and form a main/diversity receive pattern. The two channels of main/diversity RX1 signals are filtered, pass the same local oscillator, and are mixed to intermediate frequency signals of the same frequency range. Then, the intermediate frequency signals are sent by an intermediate frequency filter to a dual-channel ADC for conversion from analog to digital. The receiving and processing processes for the two channels of RX2 signals from frequency band 13 of ANTA and ANTB are the same as those for the RX1 signals. The intermediate frequency signals are filtered and sent to another dual-channel ADC for conversion from analog to digital.

The transceiver structure shown in FIG. 1 allows one radio frequency module to process signals of two frequency bands at the same time.

To implement the processing of signals from two frequency bands, the preceding radio frequency module, however, requires four independent receive channels and two dual-channel ADCs in addition to a local oscillator. As a result, the transceiver structure is complicated, the hardware scale is large and the cost is high. In addition, as the hardware scale increases, the number of components increases, leading to low reliability and large power consumption.

As such, in the embodiments of the present invention, the structure of the preceding radio frequency module is changed. By designing the transceiver structure, the complexity and cost of the TRX structure of the radio frequency module are lowered, the reliability of the radio frequency module is improved, and the power consumption is reduced.

The following describes the radio frequency module and relevant implementation methods in the embodiments of the present invention.

### Embodiment 1

This embodiment provides one radio frequency module (transceiver) that may process signals of at least two frequency bands at the same time.

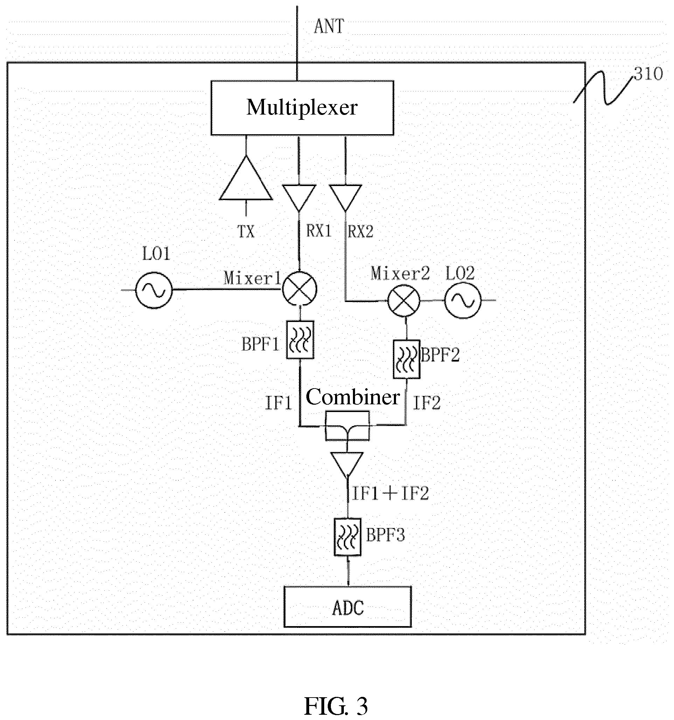

FIG. 3 shows the structure of the radio frequency module 310. This radio frequency module includes:
at least one multiplexer, each being configured to receive radio frequency signals of at least two frequency bands, wherein when receiving radio frequency signals of two frequency bands, the preceding multiplexer, may be, for example, a triplexer; when receiving radio frequency signals of three frequency bands, the preceding multiplexer maybe, for example, a tetraplexer; when receiving radio frequency signals of four frequency bands, the preceding multiplexer maybe, for example, a pentaplexer. The present invention, however, is not confined by these examples. When at least two (including two) multiplexers are used, radio frequency signals received by the at least two multiplexers form a main/diversity receive pattern, that is, the radio frequency signals received by the at least two multiplexers are divided into the main radio frequency signal and the diversity radio frequency signal;
at least two frequency mixing units, each being configured to down frequency mix a radio frequency signal of one of different frequency bands through a local oscillator to one of different intermediate frequency ranges, to obtain intermediate frequency signals within the different intermediate frequency ranges corresponding to the different frequency bands, wherein each frequency mixing unit may include a frequency mixer and a local oscillator. When the multiplexer receives radio frequency signals of two frequency bands, the radio frequency module may include two frequency mixing units, Mixer1 and Mixer2 in FIG. 3, which are configured to respectively mix the radio frequency signals of each frequency band by using the local oscillator to obtain two channels of intermediate frequency signals of different frequency ranges corresponding to the two frequency bands, where the frequency ranges of the two channels are IF1 and IF2 respectively;
at least one combiner, each being configured to merge the intermediate frequency signals received by each multiplexer within the different frequency ranges corresponding to the different frequency bands in the frequency domains, wherein, for example, two intermediate frequency signals whose frequency ranges are IF1 and IF2 respectively are merged to an intermediate frequency signal whose frequency spectrum is wider. The frequency range of the merged intermediate frequency signal is IF1+IF2; and
a multi-channel analog-digital converter (ADC), configured to perform a intermediate frequency conversion from analog to digital for the merged intermediate frequency analog signal, wherein, this ADC, for example, may be a multi-channel ADC that includes two or more channels to perform analog-digital conversion for the merged intermediate frequency analog signals, and for the ADC, the processing and principles are the same in the case of a narrowband frequency, for example, the frequency range being IF1 or IF2, or a broadband frequency, for example, the frequency range being IF1+IF2, as long as the frequency range of the intermediate frequency analog signal is within the working bandwidth range of the ADC, so more descriptions are not made here.

The preceding radio frequency module allows using one dual-channel or multi-channel ADC to process signals received from multiple frequency bands, thereby greatly simplifying the transceiver, reducing the hardware scale and cost, improving the reliability, and reducing the power consumption.

### Embodiment 2

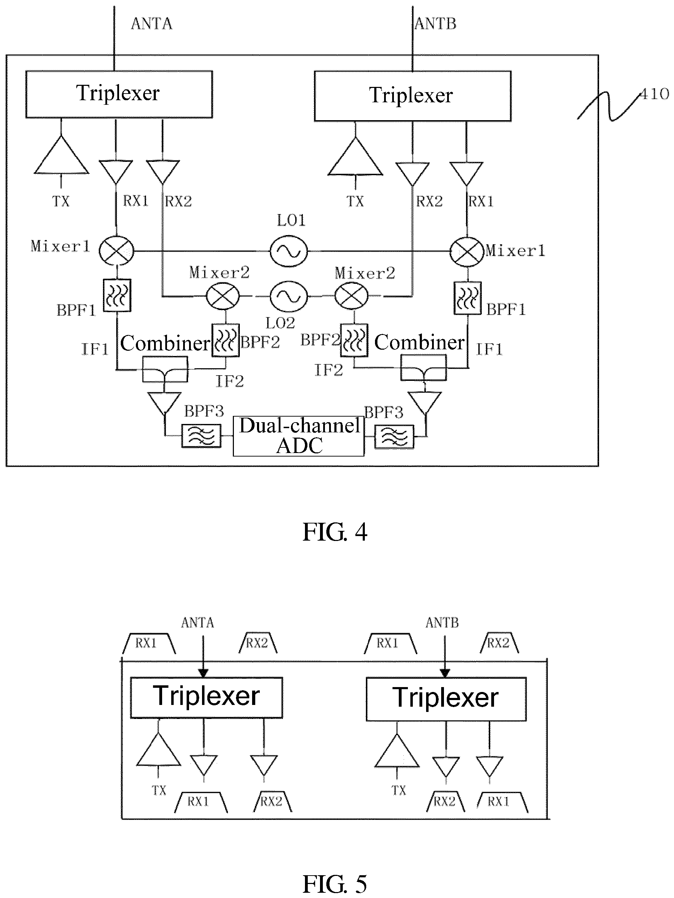

This embodiment provides a radio frequency module (transceiver) that supports 2T2R (2 transmitter 2 receiver) for two frequency bands. This radio frequency module works with the current triplexer technology to process signals of two frequency bands at the same time. FIG. 4 shows the radio frequency module that uses triplexers in this embodiment.

The radio frequency module 410 as shown in FIG. 4 consists of two triplexers, two frequency mixing circuits, two combiners, and one dual-channel ADC.

Each triplexer is configured to receive radio frequency signals RX1 and RX2 of different frequency bands. The radio frequency signals received by two triplexers form a main/diversity receive pattern. That is, the two radio frequency signals received by two triplexers are main and diversity signals respectively.

The two frequency mixing circuits are configured to mix the main and diversity signals respectively. As shown in FIG. 4, frequency mixers Mixer1 and Mixer2 form two frequency mixing circuits with local oscillators LO1 and LO2 respectively. These two frequency mixing circuits mix radio frequency signals such as RX1 and RX2 of different frequency bands to different intermediate frequency ranges to obtain two intermediate frequency signals in different frequency ranges. The frequency ranges of the two intermediate frequency signals are IF1 and IF2 respectively.

Each combiner is configured to merge two intermediate frequency signals whose frequency ranges are IF1 and IF2 respectively to an intermediate frequency signal whose frequency spectrum is wider. The frequency range of the merged intermediate frequency signal is IF1+IF2. The combiner sends the merged entire intermediate frequency signal to one dual-channel ADC for processing.

The dual-channel ADC is configured to convert the merged intermediate frequency analog signal into a digital signal.

This structure greatly reduces the complexity and saves the hardware scale and cost, thereby improving reliability and reducing power consumption.

In this embodiment, two triplexers are used to implement the 2T2R mode. Each triplexer consists of one transmit cavity, two receive cavities, and four interfaces, including one antenna interface (ANTA or ANTB), one interface with the transmit cavity, and two interfaces with the receive cavities. The two triplexers in FIG. 4 respectively receive two signals from ANTA and ANTB to form the main/diversity receive pattern.

In this embodiment, the triplexers process transmit signals in the same way as the triplexers in the radio frequency module 110 in the previous embodiment.

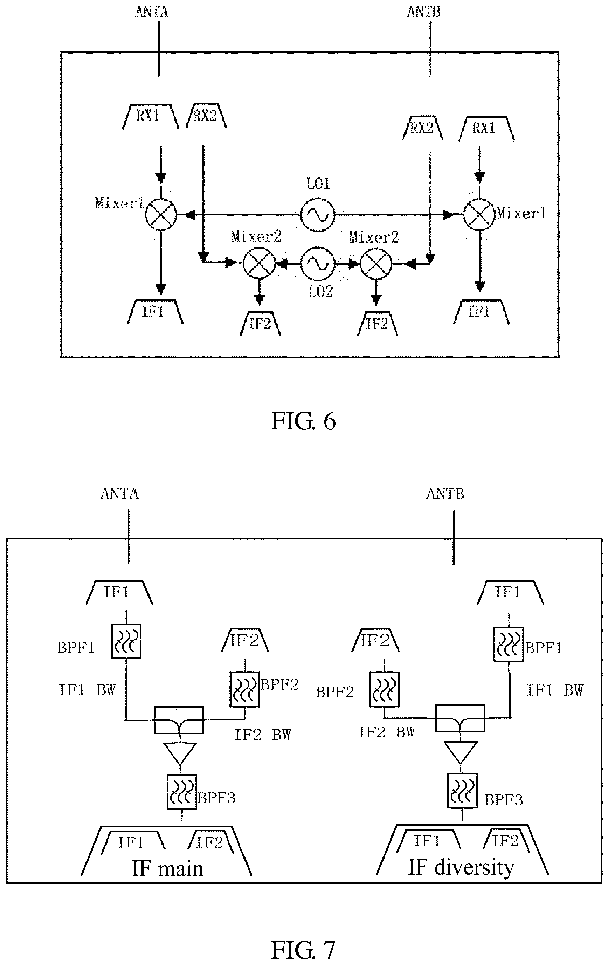

The implementation principles of the radio frequency module in this embodiment are as follows:
(1) As shown FIG. 5, the triplexers receive the radio frequency signals of two frequency bands from antenna interfaces ANTA and ANTB, and form radio frequency signals RX1 and RX2 with independent frequency domains after passing through the main/diversity receive cavity filters of the triplexers (not illustrated).
(2) As shown in FIG. 6, after the radio frequency signals RX1 and RX2 are amplified, different frequency mixing circuits are used to mix RX1 and RX2 to intermediate frequency signals in different frequency ranges with certain bandwidths.

Each frequency mixing circuit may include a frequency mixer and a local oscillator. Different frequency mixing circuits may correspond to different local oscillators. In this way, the radio frequency signals RX1 and RX2 may be mixed to different frequency ranges respectively through frequency mixers and two different RF local oscillators, and the frequency ranges of mixed intermediate frequency signals are IF1 and IF2.

(3) As shown in FIG. 7, intermediate frequency filters BPF1 and BPF2 filter the two mixed intermediate frequency signals.

When signals of two frequency bands co-exist, a blocking signal in one frequency band may become intra-frequency interference to a blocking signal in another frequency band. Filters BPF1 and BPF2 in intermediate frequency channels may be used to suppress intra-frequency interference. The suppression of filters BPF1 and BPF2 for intra-frequency interference may be considered according to the requirements for intermediate frequency and image frequency suppression.

The following takes the process in which a blocking signal of signal RX1 causes interference to signal RX2 for example to illustrate the function of a filter.

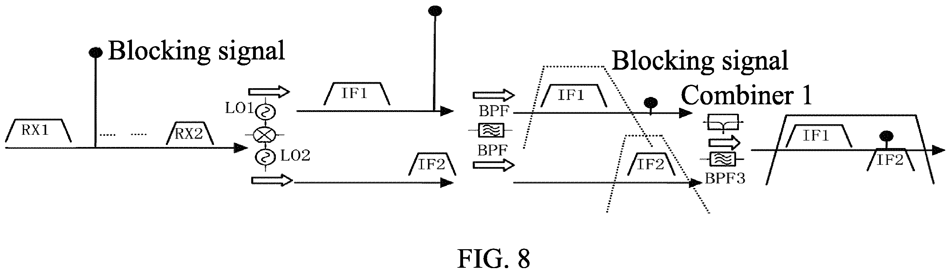

As shown in FIG. 8, a blocking signal exists in the frequency band where signal RX1 is located. After frequency mixing, signals RX1 and RX2 obtain intermediate frequency signals whose frequency ranges are IF1 and IF2. The existing blocking signal may cause intra-frequency interference to a signal whose frequency range is IF2. After the two intermediate frequency signals pass through intermediate frequency filters BPF1 and BPF2, the blocking signal is mostly filtered out. Therefore, the intra-frequency interference caused by the blocking signal to the signal in frequency range IF2 is effectively suppressed.

(4) As shown in FIG. 7, after being filtered in intermediate frequency, two intermediate frequency signals are merged by a combiner to one intermediate frequency signal.

The combiner is used to merge the frequency domains of the two intermediate frequency signals, that is, to merge the frequency spectrums of the two intermediate frequency signals, so as to obtain an intermediate frequency signal whose frequency range is IF1+IF2. The merged intermediate frequency signal may use an amplification filter circuit for filtering and amplification.

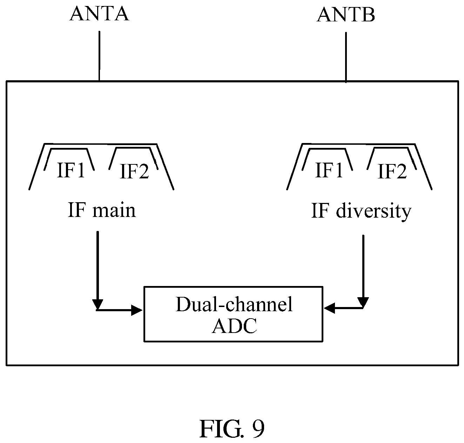

(4) As shown in FIG. 9, the main and diversity signals of the merged intermediate frequency signal are sent to a dual-channel ADC for processing.

The dual-channel ADC may be the AD6655 analog-digital conversion chip provided by ADI company. As the processing bandwidth of the ADC increases, signals from more frequency bands may be processed at the same time.

One dual-channel ADC is used to process main/diversity receive signals from two frequency bands. Therefore, the four receive channels in the embodiment of the present invention are not independent, thereby reducing the complexity of the receiver structure.

By changing the structure of the receiver in the transceiver, the radio frequency module provided in this embodiment of the present invention mixes radio frequency signals of different frequency bands to different intermediate frequency ranges, merges received intermediate frequency signals, and sends the merged intermediate frequency signals to a dual-channel ADC for processing. In this manner, one 2T2R radio frequency module may process signals of multiple frequency bands at the same time. One dual-channel ADC is used to support processing of main and diversity receive signals of two frequency bands at the same time. Therefore, this embodiment greatly reduces the hardware complexity of the radio frequency module, saves the cost, and reduces the power consumption. The present invention may reduce the cost more greatly in a multi-transmit multi-receive system than in a 2T2R system. As the number of concurrent processing channels and the processing bandwidth of the ADC increase, this advantage becomes more explicit.

### Embodiment 3

This embodiment provides another radio frequency module (transceiver) that supports 2T2R for two frequency bands.

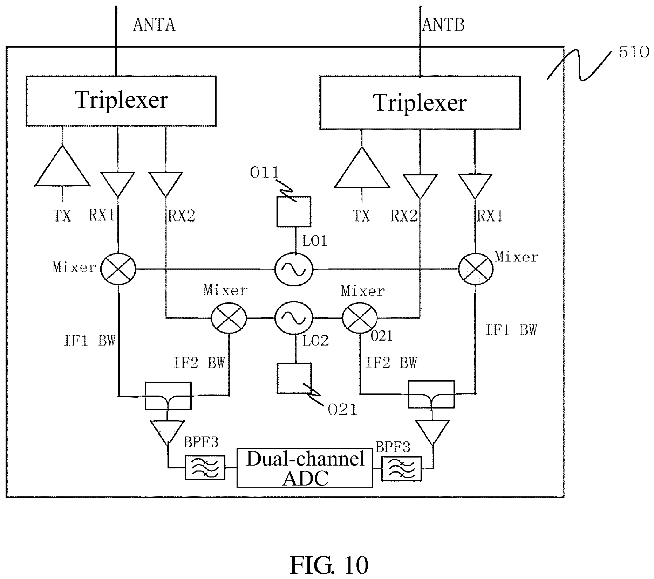

In the radio frequency module in embodiment 2, intermediate frequency filters BPF1 and BPF2 are set to remove intra-frequency blocking interference. However, after BPF1 and BPF2 are set, the complexity of the channel is increased. Therefore, in this embodiment, intermediate frequency filters BPF1 and BPF2 are not set. The frequencies of local oscillators LO1 and LO2 are properly configured to suppress the intra-frequency blocking interference. FIG. 10 shows a structure of the radio frequency module in this embodiment.

The difference between the radio frequency module 510 in this embodiment and the radio frequency module 410 in embodiment 2 is as follows: Intermediate frequency filters BPF1 and BPF2 are not set. Instead, the local oscillators corresponding to each frequency band are set with local oscillator adjustment units 011 and 021.

The local oscillator adjustment units 011 and 021 are configured to analyze air interface blocking feedback information and adjust the frequency of the local oscillator corresponding to each frequency band according to the position of an air interface blocking signal in the air interface blocking feedback information to adjust the frequency offset of the intermediate signal obtained by mixing the radio frequency signals of each frequency band, so as to avoid intra-frequency blocking interference. The local oscillator adjustment units may be software functional modules and be implemented through software configuration.

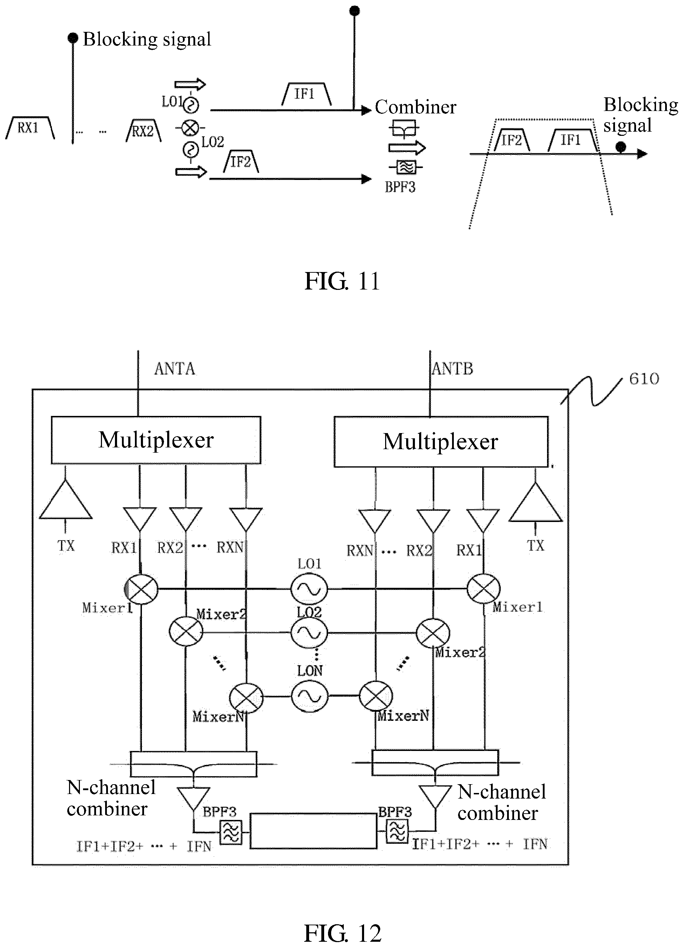

FIG. 11 shows a process of suppressing a blocking signal by using local oscillator adjustment units to configure the local oscillators. From the figure, it may be seen that by properly configuring (increasing or reducing) the frequencies of local oscillators LO1 and LO2, the blocking interference is placed beyond the band of BPF3, and thus intra-frequency blocking interference is suppressed. Compared with FIG. 10, the relative positions of intermediate frequency signals IF1 and IF2 in FIG. 11 are changed. The structure and method in this embodiment are more flexible, in which suppression of intra-frequency blocking signals is implemented according to actual situation of the blocking signal at the air interface.

### Embodiment 4

Embodiments 2 and 3 provide radio frequency modules that may receive signals of two frequency bands at the same time. The present invention, however, is not confined to these embodiments. The present invention may also solve the issue of processing signals of three or more frequency bands at the same time.

FIG. 12 shows a structure of a 2T2R RF front-end module 610 (transceiver) that supports concurrent processing of signals of N frequency bands.

As shown in FIG. 12, each multiplexer is configured to receive radio frequency signals RX1, RX2, ..., RXN of multiple frequency bands.

The N frequency mixing circuits are configured to mix radio frequency signals RX1, RX2, ..., RXN of different frequency bands to different frequency ranges of an intermediate frequency to obtain N intermediate frequency signals IF1, IF2, ..., IFN in different frequency ranges. As shown in FIG. 12, frequency mixers Mixer1, Mixer2, ..., MixerN form N frequency mixing circuits with local oscillators LO1, LO2, ..., LON.

Each N-channel combiner is configured to merge the intermediate frequency signals in different frequency ranges into one intermediate frequency signal, and send the entire merged intermediate frequency signal into one dual-channel ADC for processing.

The dual-channel ADC is configured to perform conversion from analog to digital for the merged intermediate frequency signals of N frequency bands.

In the embodiments radio frequency signals of different frequency bands are mixed to different frequency ranges of an intermediate frequency to receive intermediate frequency signals and send the merged intermediate frequency signals to a dual-channel ADC for processing. In this way, one 2T2R radio frequency module supports concurrent processing of signals of multiple frequency bands, which greatly reduces the hardware complexity and cost of the radio frequency module, improves the reliability, and reduces the power consumption.

The preceding embodiment takes a 2T2R radio frequency module for example. However, the present invention is not confined to a 2T2R system, but is also applicable to other MTMR systems. When applied in an MTMR system, the present invention uses multiple main antennas and multiple diversity channels to receive radio frequency signals of multiple frequency bands to mix the main signal and diversity signals and merge the frequency domains of the signals, and uses a multi-channel ADC to perform conversion from analog to digital for combined intermediate frequency signals, each intermediate frequency signal, before combined, obtained through down frequency mixing radio frequency signals of N frequency bands received from the main antenna and the multiple diversity antennas. The present invention may reduce the cost more greatly in a multi-transmit multi-receive (MTMR) system than in a 2T2R system. As the number of concurrent processing channels and the processing bandwidth of the ADC increase, this advantage becomes more explicit.

This embodiment is applicable to the scenario of multiple E-UTRA frequency bands in the 3GPP TS 36.104 protocol, and also applicable to the scenarios of other frequency bands.

The technical scheme in the present invention may be used in the RRU or RFU at all mobile communication base stations in GSM, UMTS, LTE, and CDMA networks, and also used in RF front-end architectures in other RF and microwave communication fields when concurrent processing for multiple frequency bands is involved.

### Embodiment 5

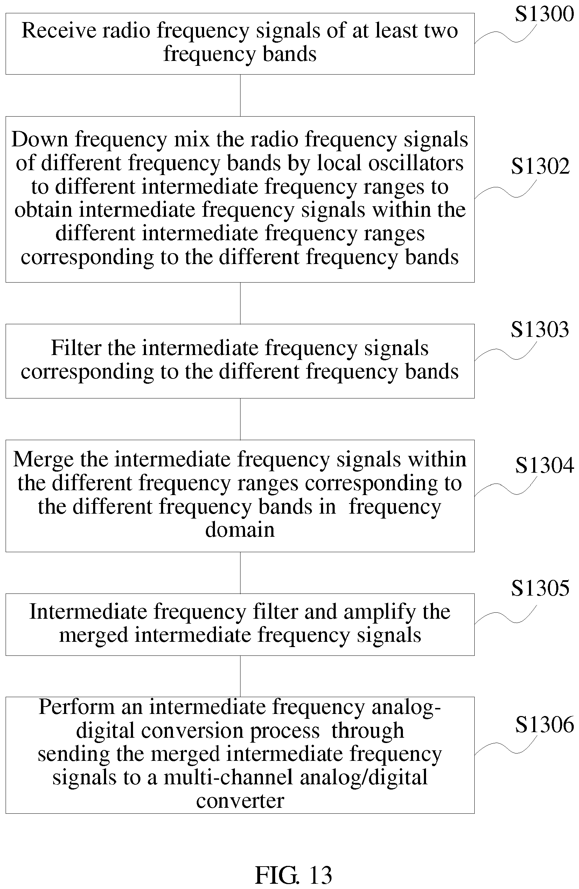

This embodiment provides a method for supporting multiple bands coexistence in a radio frequency module as shown in FIG. 13. This method includes:
Step S1300: Receive radio frequency signals of at least two frequency bands, wherein, in a 2T2R system, at least two multiplexers may be used to receive the radio frequency signals of at least two frequency bands in a main/diversity mode, wherein the radio frequency signal of each frequency band consists of a main radio frequency signal and a diversity radio frequency signal;
Step S1302: Down frequency mix the radio frequency signals of different frequency bands through local oscillators to different frequency ranges of an intermediate frequency to obtain intermediate frequency signals within the different frequency ranges corresponding to the different frequency bands, wherein,
   in a 2T2R system, the main radio frequency signal and the diversity radio frequency signal, both of which are of a same frequency band, may be mixed by the same local oscillator to same frequency ranges of the intermediate frequency to obtain main and diversity intermediate frequency signals within the different frequency ranges corresponding to the different frequency bands;
Step S1304: Merge the intermediate frequency signals within the different frequency ranges corresponding to the different frequency bands in the frequency domains, wherein,
   for a 2T2R system, the multiple intermediate frequency signals in the main antenna and in the diversity antenna are respectively merged in the frequency domains to obtain a main aggregate signal and a diversity aggregate signal; and
Step S1306: Perform an intermediate frequency analog-digital conversion process through sending the merged intermediate frequency signals to a multi-channel analog-digital converter, wherein,
   in a 2T2R system, the main intermediate frequency signal and diversity intermediate frequency signal are sent to a dual-channel analog-digital converter to perform an analog-digital conversion process of the intermediate frequency.

In another embodiment the step prior to step S1304 further includes: step S1303, filtering intermediate frequency signals at the intermediate frequency corresponding to each frequency band. This step may suppress an intra-frequency blocking signal.

In another embodiment of the present invention, the step prior to step S1306 further includes:
Step S1305: Filter and amplify merged intermediate frequency signals at the intermediate frequency.

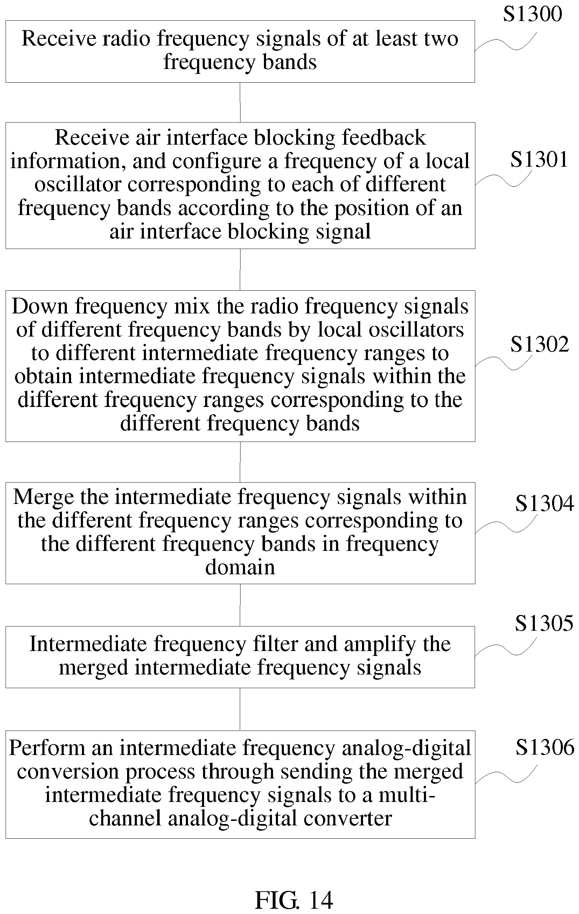

In another embodiment shown in FIG. 14, the step prior to step S1302 further includes:
Step S1301: Analyze air interface blocking feedback information and adjust the frequency of the local oscillator corresponding to each frequency band according to the position of the air interface blocking signal in the air interface blocking feedback information, so as to adjust the frequency offset of the intermediate signals obtained by mixing the radio frequency signals of each frequency band. This step may more flexibly suppress the intra-frequency blocking signal than step 530.

It is understandable to those skilled in the art that all or part of the steps in the foregoing embodiments may be performed through hardware instructed by a program. The program may be stored in a computer-readable storage medium such as ROM/RAM, magnetic disk, and compact disk.

The scope of protection of the invention is defined by the appended claims.

## Claims

1. A method for supporting multiple bands coexistence, wherein the method comprises:
receiving (S1300) radio frequency signals of at least two frequency bands;
down frequency mixing (S 1302) the radio frequency signals of different frequency bands to different intermediate frequency ranges to obtain intermediate frequency signals within the different intermediate frequency ranges corresponding to the different frequency bands;
merging (S 1304) the intermediate frequency signals within the different intermediate frequency ranges corresponding to the different frequency bands in frequency domain; and
performing (S1306) conversion from analog to digital for the merged intermediate frequency signals,
**characterized in that**
local oscillators corresponding to each of the different frequency bands are used for the down frequency mixing (S 1302) of the radio frequency signals, and
a multi-channel analog-digital converter is used for the conversion from analog to digital,
wherein prior to the down frequency mixing (S1302), the method further comprises adjusting a frequency of one of the local oscillators corresponding to each of the different frequency bands according to a position of a blocking signal at an air interface.

2. The method according to claim 1, wherein, after the merging (S1304), the method further comprises intermediate-frequency-filtering and amplifying the merged intermediate frequency signals.

3. 4-The method according to any one of claims 1 to 2, wherein the receiving radio frequency signals of at least two frequency bands further comprises:
using at least two multiplexers to receive the radio frequency signals of at least two frequency bands in main and diversity mode, wherein the radio frequency signal of each frequency band comprises a main radio frequency signal and a diversity radio frequency signal.

4. The method according to claim 3, wherein the down frequency mixing (S 1302) the radio frequency signals of different frequency bands further comprises:
down frequency mixing the main radio frequency signal and the diversity radio frequency signal, both of which are of a same frequency band, through a local oscillator to same intermediate frequency ranges to obtain a main intermediate frequency signal and a diversity intermediate frequency signal within the different intermediate frequency ranges corresponding to the different frequency bands.

5. The method according to claim 4, wherein the merging (S1304) the intermediate frequency signals further comprises:
merging the intermediate frequency signals within the different intermediate frequency ranges corresponding to the different frequency bands in frequency domain in the main intermediate frequency signal to obtain a main aggregate signal and merging the intermediate frequency signals within the different intermediate frequency ranges corresponding to the different frequency bands in frequency domain in the diversity intermediate frequency signal to obtain a diversity aggregate signal.

6. The method according to claim 5, wherein the performing (S1306) conversion from analog to digital further comprises:
performing intermediate frequency conversion from analog to digital for the main aggregate signal and diversity aggregate signal by a multi-channel analog-digital converter.

7. A radio frequency module (610) , comprising:
at least one multiplexer, each being configured to receive radio frequency signals of at least two frequency bands;
at least two frequency mixing units (mixer1, mixer2), being configured to down frequency mix radio frequency signals of different frequency bands that are received by the at least one multiplexers to different intermediate frequency ranges, to obtain intermediate frequency signals within the different intermediate frequency ranges corresponding to the different frequency bands;
at least one combiner, each being configured to merge the intermediate frequency signals, received by each multiplexer, within the different intermediate frequency ranges corresponding to the different frequency bands in frequency domain; ,
**characterized in that**
the at least two frequency mixing units comprise local oscillators (LO1, LO2) configured to be used to down frequency mix the radio frequency signals,
and **in that** the radio frequency module further comprises
a multi-channel analog-digital converter (ADC), configured to perform an intermediate frequency conversion from analog to digital for the merged intermediate frequency signals, and
a local oscillator adjustment unit (011, 021), configured to adjust a frequency of a local oscillator corresponding to each of the different frequency bands according to a position of a blocking signal at an air interface, prior to the down frequency mixing.

8. The radio frequency unit according to claim 7, further comprising:
at least one second intermediate frequency filter, each connecting respectively a combiner and the analog-digital converter and configured to intermediate-frequency-filter and amplify the intermediate frequency signals merged by each of the at least one combiner.

9. A distributed base station, comprising a remote radio unit, which is the radio frequency module according to any one of claims 7 to 8.

10. A terminal, comprising a radio frequency unit, which is the radio frequency module according to any one of claims 7 to 8.

11. A system, comprising a base station according to claim 9 or a terminal according to claim 10.

## Patentansprüche

1. Verfahren zum Unterstützen einer Koexistenz mehrerer Bänder, wobei das Verfahren umfasst:
Empfangen (S1300) von Hochfrequenzsignalen von mindestens zwei Frequenzbändern;
Frequenzabwärtsmischen (S1302) der Hochfrequenzsignale von verschiedenen Frequenzbändern auf verschiedene Zwischenfrequenzbereiche, um Zwischenfrequenzsignale innerhalb der verschiedenen Zwischenfrequenzbereiche zu erhalten, die den verschiedenen Frequenzbändern entsprechen;
Zusammenfügen (S1304) der Zwischenfrequenzsignale innerhalb der verschiedenen Zwischenfrequenzbereiche, die den verschiedenen Frequenzbändern im Frequenzbereich entsprechen; und
Durchführen (S1306) einer Umwandlung von analog zu digital für die zusammengefügten Zwischenfrequenzsignale,
**dadurch gekennzeichnet, dass**
lokale Oszillatoren, die jedem der verschiedenen Frequenzbänder entsprechen, für das Frequenzabwärtsmischen (S1302) der Hochfrequenzsignale verwendet werden, und ein mehrkanaliger Analog-Digital-Wandler für die Umwandlung von analog zu digital verwendet wird,
wobei das Verfahren ferner vor dem Frequenzabwärtsmischen (S1302) das Einstellen einer Frequenz eines der lokalen Oszillatoren umfasst, die jedem der verschiedenen Frequenzbänder gemäß einer Position eines Sperrsignals an einer Luftschnittstelle entspricht.

2. Verfahren nach Anspruch 1, wobei das Verfahren nach dem Zusammenfügen (S1304) ferner ein Zwischenfrequenzfiltern und Verstärken der zusammengefügten Zwischenfrequenzsignale umfasst.

3. Verfahren nach einem der Ansprüche 1 bis 2, wobei das Empfangen von Hochfrequenzsignalen von mindestens zwei Frequenzbändern ferner umfasst:
Verwenden von mindestens zwei Multiplexern, um die Hochfrequenzsignale von mindestens zwei Frequenzbändern im Haupt- und Diversitätsmodus zu empfangen, wobei das Hochfrequenzsignal jedes Frequenzbandes ein Haupt-Hochfrequenzsignal und ein Diversitäts-Hochfrequenzsignal umfasst.

4. Verfahren nach Anspruch 3,
wobei das Frequenzabwärtsmischen (S1302) der Hochfrequenzsignale unterschiedlicher Frequenzbänder ferner umfasst:
Frequenzabwärtsmischen des Haupt-Hochfrequenzsignals und des Diversitäts-Hochfrequenzsignals, die beide in einem gleichen Frequenzband liegen, durch einen lokalen Oszillator auf gleiche Zwischenfrequenzbereiche, um ein Haupt-Zwischenfrequenzsignal und ein Diversitäts-Zwischenfrequenzsignal innerhalb der verschiedenen Zwischenfrequenzbereiche zu erhalten, die den verschiedenen Frequenzbändern entsprechen.

5. Verfahren nach Anspruch 4,
wobei das Zusammenfügen (S1304) der Zwischenfrequenzsignale ferner umfasst: Zusammenfügen der Zwischenfrequenzsignale innerhalb der verschiedenen Zwischenfrequenzbereiche, die den verschiedenen Frequenzbändern im Frequenzbereich entsprechen, in dem Haupt-Zwischenfrequenzsignal, um ein Haupt-Gesamtsignal zu erhalten, und Zusammenfügen der Zwischenfrequenzsignale innerhalb der verschiedenen Zwischenfrequenzbereiche, die den verschiedenen Frequenzbändern im Frequenzbereich entsprechen, in dem Diversitäts-Zwischenfrequenzsignal, um ein Diversitäts-Gesamtsignal zu erhalten.

6. Verfahren nach Anspruch 5,
wobei das Durchführen (S1306) des Umwandelns von analog zu digital ferner umfasst: Durchführen einer Zwischenfrequenzumwandlung von analog zu digital für das Haupt-Gesamtsignal und das Diversitäts-Gesamtsignal durch einen mehrkanaligen Analog-Digital-Wandler.

7. Hochfrequenzmodul (610), umfassend:
mindestens einen Multiplexer, der jeweils dazu konfiguriert ist, Hochfrequenzsignale von mindestens zwei Frequenzbändern zu empfangen;
mindestens zwei Frequenzmischeinheiten (Mischer1, Mischer2), die dazu konfiguriert sind, Hochfrequenzsignale verschiedener Frequenzbänder, die von den mindestens einen Multiplexern empfangen werden, auf verschiedene Zwischenfrequenzbereiche frequenzabwärts zu mischen, um Zwischenfrequenzsignale innerhalb der verschiedenen Zwischenfrequenzbereiche entsprechend den verschiedenen Frequenzbändern zu erhalten;
mindestens einen Kombinierer, der dazu konfiguriert ist, die von jedem Multiplexer empfangenen Zwischenfrequenzsignale innerhalb der verschiedenen Zwischenfrequenzbereiche zusammenzuführen, die den verschiedenen Frequenzbändern im Frequenzbereich entsprechen;,
**dadurch gekennzeichnet, dass**
die mindestens zwei Frequenzmischeinheiten lokale Oszillatoren (LO1, LO2) umfassen, die dazu konfiguriert sind, die Hochfrequenzsignale frequenzabwärts zu mischen,
und dass das Hochfrequenzmodul ferner einen mehrkanaligen Analog-Digital-Wandler (ADC) umfasst, der dazu konfiguriert ist, eine Zwischenfrequenzumwandlung von analog zu digital für die zusammengefügten Zwischenfrequenzsignale durchzuführen, und
eine lokale Oszillator-Einstelleinheit (011, 021), die dazu konfiguriert ist, eine Frequenz eines lokalen Oszillators, der jedem der verschiedenen Frequenzbänder entspricht, gemäß einer Position eines Sperrsignals an einer Luftschnittstelle vor dem Frequenzabwärtsmischen einzustellen.

8. Hochfrequenzeinheit nach Anspruch 7, ferner umfassend:
mindestens ein zweites Zwischenfrequenzfilter, das jeweils einen Kombinierer und den Analog-Digital-Wandler verbindet und dazu konfiguriert ist, die von jedem der mindestens einen Kombinierer zusammengefügten Zwischenfrequenzsignale zu zwischenfrequenzfiltern und zu verstärken.

9. Verteilte Basisstation, umfassend eine entfernte Funkeinheit, die das Hochfrequenzmodul nach einem der Ansprüche 7 bis 8 ist.

10. Endgerät, umfassend eine Hochfrequenzeinheit, die das Hochfrequenzmodul nach einem der Ansprüche 7 bis 8 ist.

11. System, umfassend eine Basisstation nach Anspruch 9 oder ein Endgerät nach Anspruch 10.

## Revendications

1. Procédé de prise en charge de coexistence de bandes multiples, le procédé comportant les étapes consistant à :
recevoir (S1300) des signaux à radiofréquences d'au moins deux bandes de fréquences ;
mélanger avec abaissement de fréquence (S1302) les signaux à radiofréquences de bandes de fréquences différentes vers différentes plages de fréquences intermédiaires pour obtenir des signaux de fréquences intermédiaires à l'intérieur des différentes plages de fréquences intermédiaires correspondant aux bandes de fréquences différentes ;
fusionner (S1304) les signaux de fréquences intermédiaires à l'intérieur des différentes plages de fréquences intermédiaires correspondant aux bandes de fréquences différentes dans le domaine fréquentiel ; et
réaliser (S1306) une conversion analogique-numérique pour les signaux fusionnés de fréquences intermédiaires,
**caractérisé en ce que**
des oscillateurs locaux correspondants à chacune des bandes de fréquences différentes sont utilisés pour le mélange avec abaissement de fréquence (S1302) des signaux à radiofréquences, et
un convertisseur analogique-numérique multicanaux est utilisé pour la conversion analogique-numérique,
avant le mélange avec abaissement de fréquence (S1302), le procédé comportant en outre le réglage d'une fréquence d'un des oscillateurs locaux correspondant à chacune des bandes de fréquences différentes d'après une position d'un signal de blocage au niveau d'une interface radio.

2. Procédé selon la revendication 1, le procédé comportant en outre, après la fusion (S1304), le filtrage en fréquences intermédiaires et l'amplification des signaux fusionnés de fréquences intermédiaires.

3. Procédé selon l'une quelconque des revendications 1 et 2, la réception de signaux à radiofréquences d'au moins deux bandes de fréquences comportant en outre :
l'utilisation d'au moins deux multiplexeurs pour recevoir les signaux à radiofréquences d'au moins deux bandes de fréquences en mode principal et de diversité, le signal à radiofréquence de chaque bande de fréquences comportant un signal principal à radiofréquence et un signal à radiofréquence en diversité.

4. Procédé selon la revendication 3, le mélange avec abaissement de fréquence (S1302) des signaux à radiofréquences de bandes de fréquences différentes comportant en outre :
le mélange avec abaissement de fréquence du signal principal à radiofréquence et du signal à radiofréquence en diversité, tous deux faisant partie d'une même bande de fréquences, à travers un oscillateur local vers des mêmes plages de fréquences intermédiaires pour obtenir un signal principal de fréquence intermédiaire et un signal de fréquence intermédiaire en diversité à l'intérieur des différentes plages de fréquences intermédiaires correspondant aux bandes de fréquences différentes.

5. Procédé selon la revendication 4, la fusion (S1304) des signaux de fréquences intermédiaires comportant en outre :
la fusion des signaux de fréquences intermédiaires à l'intérieur des différentes plages de fréquences intermédiaires correspondant aux bandes de fréquences différentes dans le domaine fréquentiel dans le signal principal de fréquence intermédiaire pour obtenir un signal agrégé principal et la fusion des signaux de fréquences intermédiaires à l'intérieur des différentes plages de fréquences intermédiaires correspondant aux bandes de fréquences différentes dans le domaine fréquentiel dans le signal de fréquence intermédiaire en diversité pour obtenir un signal agrégé en diversité.

6. Procédé selon la revendication 5, la réalisation (S1306) d'une conversion analogique-numérique comportant en outre :
la réalisation d'une conversion analogique-numérique à fréquence intermédiaire pour le signal agrégé principal et le signal agrégé en diversité par un convertisseur analogique-numérique multicanaux.

7. Module à radiofréquences (610), comportant :
au moins un multiplexeur, dont chacun est configuré pour recevoir des signaux à radiofréquences d'au moins deux bandes de fréquences ;
au moins deux unités de mélange en fréquence (mixerl, mixer2), configurées pour mélanger avec abaissement de fréquence des signaux à radiofréquences de bandes de fréquences différentes qui sont reçus par le ou les multiplexeurs vers différentes plages de fréquences intermédiaires, pour obtenir des signaux de fréquences intermédiaires à l'intérieur des différentes plages de fréquences intermédiaires correspondant aux bandes de fréquences différentes ;
au moins un combinateur, dont chacun est configuré pour fusionner les signaux de fréquences intermédiaires, reçus par chaque multiplexeur, à l'intérieur des différentes plages de fréquences intermédiaires correspondant aux bandes de fréquences différentes dans le domaine fréquentiel ;
**caractérisé en ce que**
les au moins deux unités de mélange en fréquence comprennent des oscillateurs locaux (LO1, LO2) configurés pour être utilisés pour mélanger avec abaissement de fréquence les signaux à radiofréquences,
et **en ce que** le module à radiofréquences comporte en outre
un convertisseur analogique-numérique multicanaux (ADC), configuré pour réaliser une conversion analogique-numérique à fréquence intermédiaire pour les signaux fusionnés de fréquences intermédiaires, et
une unité de réglage d'oscillateurs locaux (011, 021), configurée pour régler une fréquence d'un oscillateur local correspondant à chacune des bandes de fréquences différentes d'après une position d'un signal de blocage au niveau d'une interface radio, avant le mélange avec abaissement de fréquence.

8. Unité à radiofréquences selon la revendication 7, comportant en outre :
au moins un second filtre à fréquences intermédiaires, dont chacun relie respectivement un combinateur et le convertisseur analogique-numérique et configuré pour filtrer en fréquences intermédiaires et amplifier les signaux de fréquences intermédiaires fusionnés par le combinateur ou chacun des combinateurs.

9. Station de base répartie, comportant une unité radio distante, qui est le module à radiofréquences selon l'une quelconque des revendications 7 et 8.

10. Terminal, comportant une unité à radiofréquences, qui est le module à radiofréquences selon l'une quelconque des revendications 7 et 8.

11. Système, comportant une station de base selon la revendication 9 ou un terminal selon la revendication 10.
